Europäisches Patentamt

(19) European Patent Office

Office européen des brevets

(11) Publication number : **0 224 318**
**B1**

(12) # EUROPEAN PATENT SPECIFICATION

(45) Date of publication of patent specification : 03.01.90

(21) Application number : 86305815.2

(22) Date of filing : 29.07.86

(51) Int. Cl.⁵ : **B 65 B 55/02, B 29 C 71/02**

(54) **Process for packaging liquid or partly liquid food products in heat-processable plastic containers.**

(30) Priority : 27.08.85 GB 8521295

(43) Date of publication of application : 03.06.87 Bulletin 87/23

(45) Publication of the grant of the patent : 03.01.90 Bulletin 90/01

(84) Designated contracting states : AT BE CH DE FR GB IT LI LU NL SE

(56) References cited :
EP—A— 0 115 380
EP—A— 0 125 013

(73) Proprietor : CMB PACKAGING (UK) LIMITED
Woodside Perry Wood Walk
Worcester WR5 1EQ (GB)

(72) Inventor : Staines, Glyn
16 Cherford Road Green Meadows
Swindon Wiltsire SN2 3PR (GB)

(74) Representative : Sawers, Lawrence Peter et al
PAGE, WHITE & FARRER 54 Doughty Street
London WC1N 2LS (GB)

## Description

The present invention relates to methods for heat-treating thermoplastic tubular articles which are at least partially oriented, these articles comprising particularly, but not exclusively, tubular articles of saturated linear polyester materials such as polyethylene terephthalate (PET), intended for use as processable food and beverage container bodies.

A degree of orientation of the container body is known to be desirable for improving its mechanical properties and is conventionally induced by mechanical deformation, such as drawing, stretching or stretch-blow-moulding of the polymer. However, the oriented body will shrink if heated above the temperature at which the mechanical deformation took place. It is known that the oriented body can be heat stabilised to an elevated temperature above the glass transition temperature, by heating it to a temperature at least 40 °C above that elevated temperature whilst restraining it from deformation: the process is known as heat-setting. Internal stress is eliminated by molecular relaxation and, where the polymer is crystallisable, by partial crystallisation.

Many food and beverage containers are filled with product at temperatures of up to 80 °C, and are then sealed and subjected subsequently to retorting, i. e. pasteurisation (at about 60 °C to 100 °C) or sterilisation (about 120 °C), depending upon the nature of the product. In such cases, the polymer container bodies must be heat-set if they are to be dimensionally stable during the thermal exposure to which they are later subjected.

If sealed at high temperatures, a lowering of pressure below ambient occurs within the container while it is allowed to cool to ambient temperature, and a tendency to panel therefore occurs as a result. Resistance to panelling has been provided in metal containers by beading the cylindrical wall of the can body to strengthen it. Such a solution is not considered suitable for PET container bodies, as beading significantly reduces the top-load performance, i. e. buckling strength, and hence reduces the number of containers which can be stacked on top of one another. Metal cans will, in any case, thermally expand and contract to a substantial degree during the heating and cooling cycle and hence are less prone to vacuum formation in the head space with consequential panelling.

An attempt to avoid panelling in thermoplastic container bodies has been made by simply using a thicker body wall, of the order of 1 mm. Not only is this wasteful of material, but such a thick-walled container body is not compatible with conventional double seaming equipment which is used for attaching metal end closures and which requires a body wall thickness in the range of from 0.25 mm to 0.75 mm.

Hitherto, it has been thought desirable to heat-set an oriented thermoplastics material at as high a temperature as possible for that material, which is a temperature just below the melting point. For instance, in the case of polyethylene terephthalate, heat-setting temperatures of around 230 °C have been used. The choice of a high heat-set temperature has ensured a minimum residual volume shrinkage (reduction in volume), e. g. less than 3 %, and hence good dimensional stability in the heat-set article. In EP 0 115 380 (American Can), which relates to containers of plastics such as a polypropylene laminate, it was stated that improved container configuration after processing can be achieved by annealing or pre-shrinking the containers before filling or sealing. The container was to be annealed until no significant shrinkage in the container volume is realized upon further anealing. Our own EP 0 125 013 stated that residual shrinkage may be used to eliminate or reduce head space in a container.

Applicants have now come to the realisation that it can be « a positive disadvantage » to heat-set a container body to such a temperature that it would undergo minimum dimensional change during subsequent thermal exposure ; contrary to present belief and practice, the use of a lower heat-setting temperature can give positive benefits in causing sufficient shrinkage to prevent panelling of the bodies of food and beverage containers which are subject to thermal exposure after filling and closing. On the other hand, too low a heat-set temperature results in excessive shrinkage of the container body on subsequent thermal exposure, with the result that substantial pressures generated within the container tend to force the end closure (s) off the container body and cause bulging of the end closure (s) and/or the container body.

According to a first aspect of the present invention, there is provided a process for packaging a liquid or semi-liquid food or beverage product in a container, which comprises :

(a) moulding a thermoplastics container body to have a body wall which is at least partially oriented and which has a wall thickness lying within the range 0.25 mm to 0.75 mm ;

(b) heat-setting the container body by thermal treatment at a predetermined temperature which is at least 10 °C below the melting point of the thermoplastics material of the container body ;

(c) charging the heat-set container body with the said product and closing it by one or more closures to form a closed container package having a headspace above the product ; and

(d) thermally processing the package at a temperature lying in the range of from 60 °C to 140 °C and for a time sufficient to condition the product for subsequent storage,

characterised in that the said predetermined heat-setting temperature is chosen to be such that during the thermal processing the container body undergoes volume shrinkage within the range 3 % to 15 %, and after the thermal processing, when the package has cooled to ambient temperature, any pressure differential across the container body wall is insufficient to cause panelling of the same, and the container body is therefore unpanelled.

A suitable material for the container body is polyethylene terephthalate for which a suitable range of predetermined heat-setting temperatures would be from 100 ºC to 230 ºC.

In order to reduce the tendency to panelling, it is desirable, when the container has cooled to ambient temperature, for the pressure within the container to be at least as great as the pressure existing outside the container; indeed, in certain cases a slight overpressure is desirable within the container, as this helps improve top-load performance. The main factor affecting the pressure in the sealed container is the head space, i. e. the air or vapour-filled gap between the product and container lid, because of its relatively high compressibility in comparison with that of the liquid or semi-liquid product, and the pressure changes which will occur during the stages of filling, retorting and cooling to ambient will depend upon the volume of this head space and the temperature changes which occur during those stages.

The head space volume is normally set at the filling station, a typical head space height being 1 cm.

For a particular food/beverage product to be processed according to a particular regime, there will be a known pressure change at constant volume (including the head space): this pressure change is normally negative, i. e. a reduction in pressure, by the time the product and head space have cooled to ambient temperatures. To counteract this pressure reduction, it is possible to determine what volume shrinkage in the container body would compensate for it so as to ensure that the pressure difference across the container body wall at ambient temperature is insufficient to cause panelling of the container body despite the thinness of the body wall imposed by practical and commercial restraints (e. g. double-seaming of end closures, polymer costs etc.).

In accordance with the present invention, it is possible to choose an appropriate heat-setting temperature for the heat-set container body to have sufficient residual shrinkage to meet the required container shrinkage during a particular subsequent thermal process: the lower the heat set temperature in relation to the processing temperature to be used, the greater the residual shrinkage which occurs during processing.

The present invention will be more fully understood by reference to the accompanying drawings in which:

Figure 1 shows graphically, for three different process temperatures, how the percentage change in volume shrinkage of a processable container having an oriented thermoplastics body varies with the temperature at which that container has been heat-set; and

Figure 2 is a diagrammatic view showing the general arrangement of the preferred apparatus by which the invention may be put into effect.

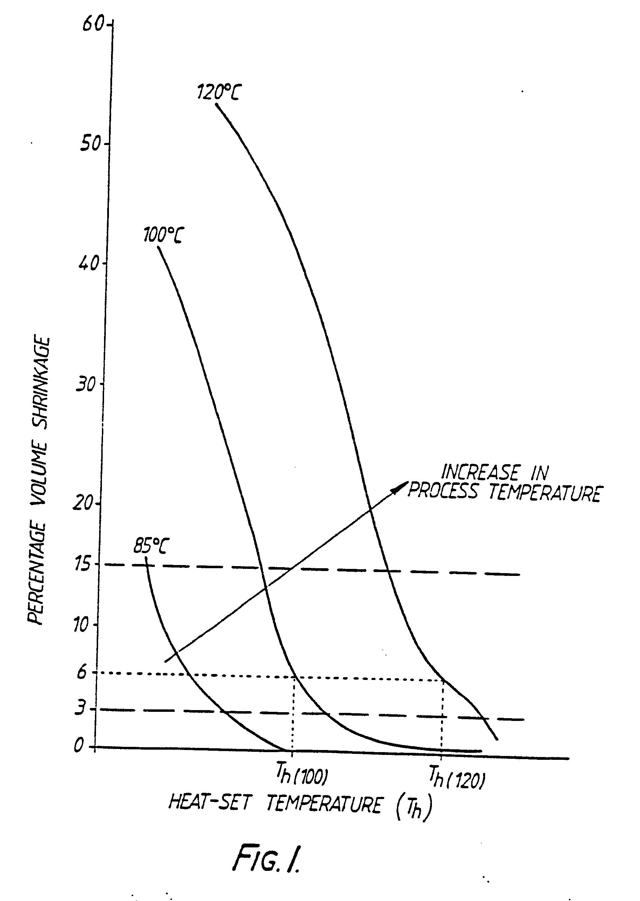

Referring to Figure 1, there is shown a family of three curves relating to identical containers charged with different products requiring different processing regimes. The curves relate to process temperature of 85 ºC, 100 ºC and 120 ºC respectively, the process times for the curves being 30 mins. in each case : these are representative temperatures and times for carrying out a typical beverage pasteurisation, fruit pasteurisation and vegetable sterilisation process respectively. From any individual curve, it will be seen that the volume shrinkage decreases with increasing heat-setting temperature $(T_h)$. The containers have tubular bodies of biaxially oriented polyethylene terephthalate (PET), and conventional metal end closures double-seamed to the ends of the bodies.

Results have shown that a 3 % volume shrinkage during processing is the minimum volume shrinkage which will ensure that the overall pressure reduction experienced within such a container during processing is insufficient to cause the panelling of the container body wall, for wall thickness within the range 0.25 mm to 0.75 mm. Furthermore, it has been found that a 15 % volume shrinkage of the container body during processing would always leave an overall positive pressure within the container but is not so great as to cause explosion or distension of the end closure (s) or the container body. Accordingly, experiment shows that a volume shrinkage in the range of from 3 to 15 % is appropriate. For a container having a body wall thickness of 0.375 mm and a diameter of 83.4 mm the preferred range of volume shrinkage is 4 % to 8 %, desirably about 6 %.

A graph of the type shown in Figure 1 could be prepared for a given thermoplastics material of the container, container configuration, particular product and its processing requirements (i. e. temperature and time and volume head space. As an example of the way in which the graph of Figure 1 may be used in practice to determine an appropriate heat-setting temperature, a percentage volume shrinkage of say 6 % is selected, and Figure 1 indicates the heat-set temperature which would be appropriate for two containers which are to be retorted at 100 ºC and 120 ºC and have the characteristics of the appropriate curves shown there. The first of these containers, holding a product such as fruit is to be pasteurised at 100 ºC and such a container would therefore have to be set at the temperature indicated $T_h$ (100). Similarly, the container which is to be retorted at a 120 ºC, for instance one which contains vegetables to be sterilised, would have to have been heat-set at the (higher) temperature $T_h$ (120) if panelling of the container body on cooling is again to be reliably avoided.

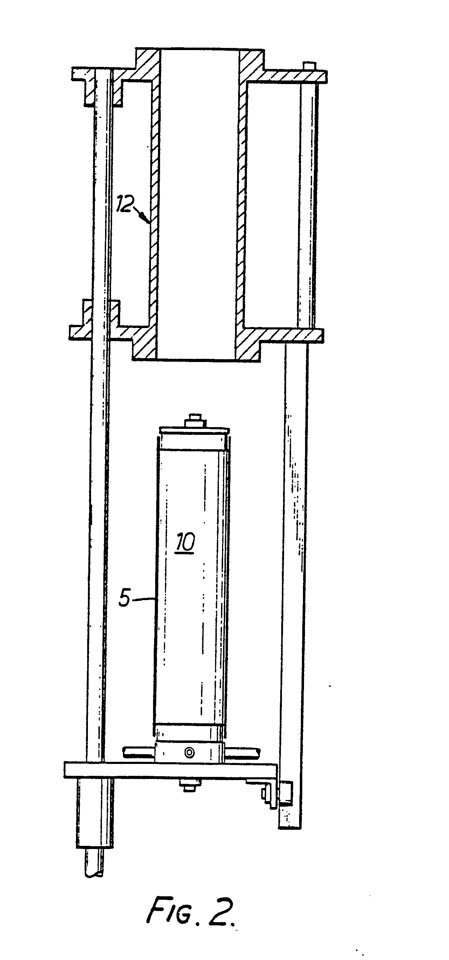

Applicants' preferred method and apparatus for performing heat-setting is as particularly shown and described in our copending U.K. Patent Application No. 8 506 932, filed 18th March 1985 to which the reader's attention is directed and the content of which is included herein by reference. For ease of reference Figure 4 of the Specification of the said Application 8 506 932 is reproduced in the present Application to form Figure 2 thereof, with reference to which the following brief description is now given.

Referring now to Fig. 2, the cylindrical container body to be heat set is indicated by the reference numeral 5 and is shown when it has been sleeved over a cooled mandrel 10 on which it is a loose or sliding fit. To achieve heat-setting of the body 5. the mandrel with the body thereon is inserted longitudinally into the central bore of a heated tubular mould 12 which then surrounds the body with a small clearance. With its ends restrained against axial movement by means not shown, the body is then expanded by differential fluid pressure radially into contact with the mould and is held there while heat-setting takes place. After the required degree of thermal stability has been imparted to the container body, the fluid pressure is removed, and the body accordingly shrinks into contact with the mandrel. The mandrel cools the body quickly to below its glass transition temperature and restrains it against further shrinkage, so giving it the predetermined cross-sectional dimensions of the body required for closing, filling and, in particular, processing as described above. After cooling, the body is stripped from the mandrel. The temperature of the mould 12, in particular its interior surface, is made to be such that during heat-setting, that is to say, while the mould is contacted by the container body 5, the polymer material of the body can within a reasonable time attain the heat-setting temperature $T_h$ throughout its wall thickness. In order to make allowance for the temperature differential which will exist across the wall, this requires an operating temperature for the mould interior surface which is greater than $T_h$.

The time allowed for heat-setting should be the minimum which will allow the body to attain the thermal condition mentioned in the preceding paragraph, and the graphs of Figure 1 are developed accordingly. It will be understood that the use of a heat-setting time greater than that required to attain the temperature Th throughout the wall thickness is undesirable in that it will tend to result in reduced throughput and in a potential residual shrinkage capability which is less than that required to ensure lack of panelling in the closed container after processing. Thus, heat-setting times within the range 5-10 secs. are typical. Moreover, attempts to reduce the required heat-setting time by increasing the mould temperature which is employed run the danger of excessive crystallisation of the PET polymer on the outside of the body, and distortion of the body during or after processing, caused by differential shrinkage within the body wall; mould temperatures lying within the range 2-10 °C above the required heat-setting temperature $T_h$ are therefore preferred.

The invention is not limited in application to containers having biaxially oriented tubular bodies of polyethylene terephthalate which are closed by metal end closures double-seamed to their ends (as particularly described). It may be used with containers having bodies of PET or other polymers (preferably, but not necessarily, crystallisable), whether biaxially or uniaxially oriented, and/or closed by end closures at one or both of their ends. The or each end closure may be double-seamed into position, or it may be attached by other means, for example by heat-sealing.

## Claims

1. A process for packaging a liquid or semi-liquid food or beverage product in a container, which comprises :

(a) moulding a thermoplastics container body to have a body wall which is at least partially oriented and which has a wall thickness lying within the range 0.25 mm to 0.75 mm ;

(b) heat-setting the container body by thermal treatment at a predetermined temperature which is at least 10 °C below the melting point of the thermoplastics material of the container body ;

(c) charging the heat-set container body with said product and closing it by one or more closures to form a closed container package having a head space above the product ; and

(d) thermally processing the package at a temperature lying in the range of from 60 °C to 140 °C for a time sufficient to condition the product for subsequent storage,

characterised in that the said predetermined heat-setting temperature is chosen to be such that during the thermal processing the container body undergoes volume shrinkage within the range 3 % to 15 %, and after the thermal processing, when the package has cooled to ambient temperature, any pressure differential across the container body wall is insufficient to cause panelling of the same, and the container body is therefore unpanelled.

2. A process as claimed in claim 1, characterised in that the container body is moulded from polyethylene terephthalate and the container body is heat-set at a predetermined temperature lying in the range of from 100 °C to 230 °C.

3. A process as claimed in claim 1 or claim 2, characterised in that the heat-setting temperature is selected such that the container body will undergo sufficient volume shrinkage during thermal processing of the package to result in a slight overpressure within the container when the package has cooled to ambient temperature.

4. A process as claimed in any preceding claim, characterised in that said head space is substantially 1 cm in height.

## Patentansprüche

1. Verfahren zum Verpacken von flüssigen oder zum Teil flüssigen Nahrungsmitteln oder Getränken in Behältnisse, bestehend aus :

(a) Formen eines thermoplastischen Behälterkörpers mit einer Körperwand, welche wenigstens teilweise gestreckt ist und eine Wanddicke aufweist, die im Bereich von 0,25 mm bis 0,75 mm liegt ;

(b) Heißfixieren des Behälterkörpers durch Wärmebehandlung bei einer vorbestimmten Temperatur, die mindestens 10 °C unter dem Schmelzpunkt des Thermoplastmaterials des Behälterkörpers liegt ;

(c) Füllen des heißfixierten Behälterkörpers mit dem entsprechenden Produkt und Verschließen desselben mit einem oder mehreren Verschlüssen zur Ausbildung einer geschlossenen Behälter-Packung mit einem freien Raum oberhalb des Produkts ; und

(d) Wärmebehandeln der Packung bei einer Temperatur, die im Bereich von 60 °C bis 140 °C liegt, über eine Zeitspanne, die ausreicht, um das Produkt für die anschließende Lagerung haltbar zu machen,

dadurch gekennzeichnet, daß die vorbestimmte Heißfixier-Temperatur derart gewählt wird, daß bei der Wärmebehandlung der Behälterkörper eine Volumenschrumpfung im Bereich von 3 % bis 15 % erfährt und nach der Wärmebehandlung, wenn sich die Packung auf Umgebungstemperatur abgekühlt hat, eine Druckdifferenz entlang der Wand des Behälterkörpers nicht ausreicht, um eine Einbuchtung desselben zu bewirken, und der Behälterkörper daher einbuchtungsfrei bleibt.

2. Verfahren nach Anspruch 1, dadurch gekennzeichnet, daß der Behälterkörper aus Polyäthylenterephthalat geformt und der Behälterkörper bei einer vorbestimmten Temperatur heißfixiert wird, welche im Bereich von 100 °C bis 230 °C liegt.

3. Verfahren nach Anspruch 2 oder 3, dadurch gekennzeichnet, daß die Heißfixierungs-Temperatur derart gewählt wird, daß der Behälterkörper während der Wärmebehandlung der Packung eine ausreichende Volumenschrumpfung erfährt, um einen leichten Überdruck im Behälter zu ergeben, wenn sich die Packung auf Umgebungstemperatur abgekühlt hat.

4. Verfahren nach einem der vorangehenden Ansprüche, dadurch gekennzeichnet, daß der freie Raum im wesentlichen eine Höhe von 1 cm aufweist.

Revendications

1. Procédé pour emballer un produit ou une boisson alimentaire liquide ou semi-liquide dans un récipient, qui comprend :

(a) le moulage d'un corps de récipient thermoplastique afin d'obtenir une paroi de corps qui est au moins partiellement orientée et qui comporte une épaisseur de paroi se situant dans la plage de 0,25 mm à 0,75 mm ;

(b) le durcissement à la chaleur du corps de récipient par un traitement thermique à une température prédéterminée qui est au moins inférieure de 10 °C au point de fusion du matériau thermoplastique du corps de récipient ;

(c) le remplissage du corps de récipient thermodurci avec ledit produit et sa fermeture par un ou plusieurs éléments de fermeture afin de former un bloc récipient clos comportant un espace libre au-dessus du produit ; et

(d) le traitement thermique du bloc à une température se situant dans la plage de 60 °C à 140 °C pendant une durée suffisant à conditionner le produit pour un stockage ultérieur,

caractérisé en ce que ladite température de durcissement la chaleur prédéterminée est choisie de telle façon que durant le traitement thermique le corps de récipient subisse un retrait de volume dans la plage de 3 % à 15 %, et qu'après le traitement thermique, lorsque le bloc a refroidi à température ambiante, tout différentiel de pression travers la paroi du corps de récipient soit insuffisante pour provoquer une déformation de celle-ci, et le corps de récipient n'est donc pas déformé.

2. Procédé selon la revendication 1, caractérisé en ce que le corps de récipient est moulé à partir de téréphtalate de polyéthylène et le corps de récipient est durci à la chaleur à une température prédéterminée se situant dans la plage de 100 °C à 230 °C.

3. Procédé selon la revendication 1 ou 2, caractérisé en ce que la température de durcissement à la chaleur est choisie de telle façon que le corps de récipient subisse un retrait de volume suffisant au cours du traitement thermique du bloc afin d'aboutir à une légère surpression à l'intérieur du récipient lorsque le bloc a refroidi à la température ambiante.

4. Procédé selon l'une quelconque des revendications précédentes, caractérisé en ce que ledit espace libre est substantiellement d'1 cm de hauteur.

FIG. I.

FIG. 2.